(19) Europäisches Patentamt
European Patent Office
Office européen des brevets

(11) **EP 4 273 508 B1**

(12) **EUROPEAN PATENT SPECIFICATION**

(45) Date of publication and mention
of the grant of the patent:
**09.04.2025 Bulletin 2025/15**

(21) Application number: **22891604.5**

(22) Date of filing: **05.09.2022**

(51) International Patent Classification (IPC):
**G01D 5/244** (2006.01)      **G01D 5/20** (2006.01)

(52) Cooperative Patent Classification (CPC):
**G01D 5/202**

(86) International application number:
**PCT/CN2022/117094**

(87) International publication number:
**WO 2023/082799 (19.05.2023 Gazette 2023/20)**

(54) **ENCODER BASED ON DUAL EXCITATION OF ORTHOGONAL TRIGONOMETRIC FUNCTION, AND METHOD FOR OPERATING SAME**

CODIERER AUF BASIS VON DUALER ERREGUNG EINER ORTHOGONALEN TRIGONOMETRISCHEN FUNKTION UND VERFAHREN ZUM BETRIEB DAVON

CODEUR BASÉ SUR UNE DOUBLE EXCITATION D'UNE FONCTION TRIGONOMÉTRIQUE ORTHOGONALE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2021 CN 202111340588**

(43) Date of publication of application:
**08.11.2023 Bulletin 2023/45**

(73) Proprietor: **Depu CNC (Shenzhen)Co., Ltd.**
**Shenzhen (CN)**

(72) Inventors:
• **XU, Zhaohua**
  **Shenzhen, Guangdong 518000 (CN)**
• **LI, Zebiao**
  **Shenzhen, Guangdong 518000 (CN)**
• **XIAO, Kun**
  **Shenzhen, Guangdong 518000 (CN)**

(74) Representative: **Bandpay & Greuter**
**11 rue Christophe Colomb**
**75008 Paris (FR)**

(56) References cited:
CN-A- 102 288 100    CN-A- 108 627 183
CN-A- 108 627 184    CN-A- 109 211 096
CN-A- 109 341 517    CN-A- 111 220 186
CN-A- 111 220 186    CN-A- 111 397 498
CN-A- 113 008 129    CN-A- 114 018 300
US-A- 4 178 064      US-A1- 2021 336 514

## Description

### Related applications

The application claims the priority of the Chinese patent application with application number 202111340588.1 filed on November 12, 2021.

### FIELD OF THE INVENTION

The invention belongs to the technical field of precision measurement, in particular, to an orthogonal trigonometric function double excitation-based encoder and an operation method thereof.

### BACKGROUND OF THE INVENTION

In the field of industrial machinery automation and CNC machining, when displacement feedback and high-precision processing and measurement for some mechanical structures are performed, encoders are often required for devices in feedback of precise positions and angles.

Currently, in the market, rulers or scales such as fiber gratings, magnetic scales, and capacitive gratings are mainly used as grating encoders, during whose movement the regular periodic changes of a certain physical quantity are used to form grating lines evenly distributed along the space, and a displacement pulse signal sent every time a grating interval passes is accumulated to obtain the displacement. The fiber grating is currently the most widely used grating encoder with high precision and mature technology, and widely used in digital high-precision mechanical measuring instruments and equipment such as high-end CNC machine tools, coordinate measuring machines, and gear measuring centers. It can be seen that the fiber grating sensor technology is the basis and key component to ensure the performance of the mechanical system. However, the fiber grating encoder has high requirements for the working environment, especially sensitive to dusty environment, oily environment, etc.; its anti-seismic ability is poor, its cost performance is low, and it is easily affected by foreign supply channels, so that its application range is relatively narrow, and it is difficult to equip it on a large scale. For decades, our country has invested a lot of manpower and material resources, but it still does not have the ability to manufacture high-end fiber grating encoders, and the equipment can only rely on imports.

In recent years, due to the improvement of domestic scientific research level and technology, an idea for an encoder of exchanging high-precision time measurement for physical changes in space has been born, which takes advantage of the current high-exponential time measurement level (i.e., the measurement accuracy of time is higher than the accuracy of physical quantities) to obtain high-precision angular displacement changes so as to design a high-precision encoder. Since this kind of encoder uses time as a "scale", the physical scale on the fiber grating disc is omitted, and the use of fragile fiber grating discs is avoided, so that it has advantages in high precision, shock resistance, economy, and ability to work in harsh environments. The most important thing is to solve the problems of supply chain and intellectual property rights, so that the domestic encoder industry sees hope.

However, the current time grating displacement encoders basically use single excitation, i.e., single single-frequency sine wave excitation, which is implemented by a phase shift method of $\left(0, \frac{\pi}{2}, \pi, \frac{3\pi}{2}\right)$. The single excitation can only achieve a single calculation reference phase, and the internal and external reference signals can only be divided by using the periodic signal of $2\pi$ as the calculation parameter, so that the calculation error is larger when the rotor rotates at high speed and low speed. When the signal source is interfered, the interference signal will be directly superimposed on the source signal. When the frequency of the interference source is close to the frequency of the source, the problems caused are difficult to deal with and the anti-interference ability is low. The patent application CN 111220186 A double-channel differential absolute time grating angular displacement encoder which comprises a rotor and a stator, wherein the rotor and the stator are coaxially and parallelly arranged.

### BRIEF SUMMARY OF THE DISCLOSURE

In view of this, it is necessary to provide an orthogonal trigonometric function double excitation-based encoder and an operation method thereof which has a high precision and a strong anti-interference ability.

The invention is set out in the appended claims.

The embodiment of the invention uses the method of orthogonal trigonometric function double excitation, i.e., combining the sine wave and the cosine wave and obtaining the combined signals by shifting $\left(0, \frac{\pi}{4}, \frac{\pi}{2}, \frac{3\pi}{4}\right)$ and

$\left(\pi, \frac{5\pi}{4}, \frac{3\pi}{2}, \frac{7\pi}{4}\right)$ in phase. Since the combination is performed by two excitations, synchronous phase differences between the source signals $y_0$, and $y_1$ and between the combined signals Y and F(t) may be simultaneously detected, and an absolute angle value is calculated by comparing the phase difference. With the phase shift of $\frac{\pi}{4}$, internal reference signals may be based on $\pi$ or $2\pi$ as a reference period, i.e., combination of (external $\pi$, internal $\pi$) and (external $\pi$, internal $2\pi$) may effectively reduce calculation errors during high-speed and low-speed rotation. Even if the phase and frequency of the source signal are disturbed, it will only appear as low-frequency interference or DC interference on the combined signals, because the center frequency of the combined signal is twice the center frequency of the source signal. In this way, it is easy to pass through the band-pass filter, and the interference signal may be eliminated, so that a relatively clean signal may be obtained for phase comparison, thereby reducing the system errors.

## Brief Description of the Drawings

Fig. 1 is a structural diagram of a stator according to an embodiment of the invention;
Fig. 2 is a structural diagram of a rotor according to an embodiment of the invention;
Fig. 3 is a diagram showing the working principle of an encoder according to an embodiment of the invention;
Fig. 4 is a flowchart of the encoder software according to an embodiment of the invention.

## Detailed Description of the Invention

In order that the objectives, technical schemes and advantages of the present invention will become more apparent, the present invention will be described in more detail with reference to the drawings and examples above. It should be understood that the specific embodiments described herein are only for illustrating but not for limiting the present invention.

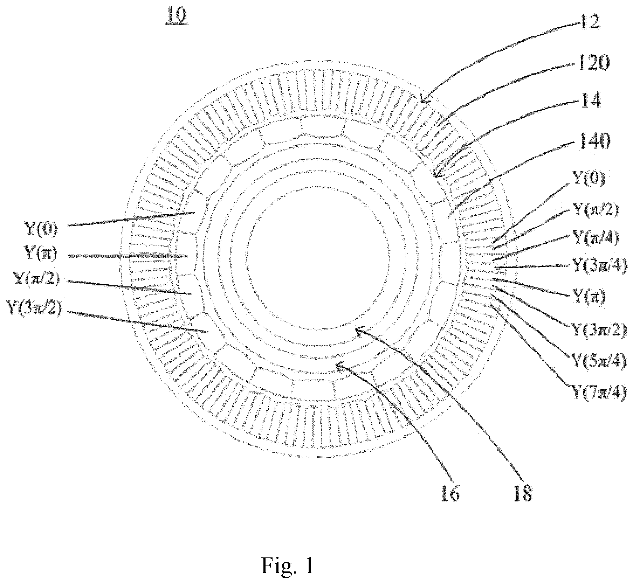

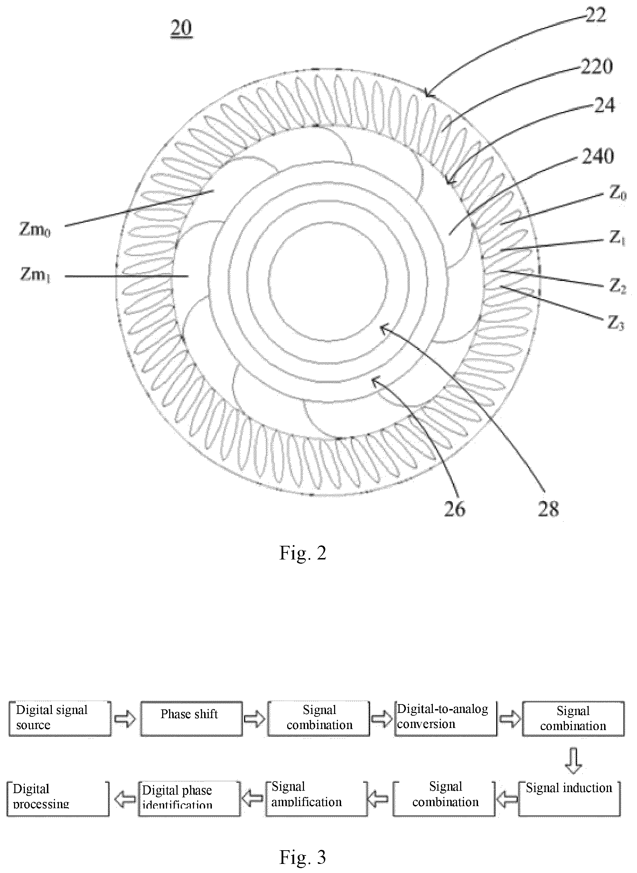

As shown in Figs. 1 and 2, an encoder of orthogonal trigonometric function double excitation according to an embodiment of the invention is shown, which includes a stator 10 and a rotor 20 that are arranged coaxially and in parallel.

The stator 10 includes an auxiliary ruler region 12, a main ruler region 14, an inner ring DA region 16 and an inner ring DB region 18 which are sequentially arranged from outside to inside. The auxiliary ruler region 12 is located at an outer ring, and is annularly and uniformly divided into a plurality of first emission sheets 120 with a center of circle of the stator 10 as a center. Every 4 first emission sheets 120 is a group, and every two groups of first emission sheets 120 are used as a phase shift period of $2\pi$. An inner end of each group of first emission sheets 120 forms a closed fan shape protruding inward, and each group of first emission sheets 120 is arranged radially and symmetrically between groups. When the rotor 20 rotates, the auxiliary ruler region 12 of the stator as an emission region verifies a zero point of a critical point of the auxiliary ruler region 22 of the rotor 20 as an induction region to perform boundary compensation. The main ruler region 14 is located inside the auxiliary ruler region 12, and is annularly and uniformly divided into a plurality of second emission sheets 140 with a center of circle of the stator 10 as a center. Every 2 second emission sheets 140 is a group, and two groups of second emission sheets 140 are used as a phase shift period of $2\pi$. An inner end of each group of second emission sheets 140 jointly forms an arc protrusion protruding toward the center of circle, and two groups of second emission sheets 140 are arranged radially and symmetrically between groups. When the rotor 20 rotates, the main ruler region 14 of the stator as an emission region verifies a zero point of a critical point of the main ruler region 24 of the rotor 20 as an induction region to perform boundary compensation. The inner ring DA region 16 and the inner ring DB region 18 are signal receiving rings, and the annular areas of the inner ring DA region 16 and the inner ring DB region 18 are equal to ensure that electric field signals of the rotor 20 may be uniformly induced and received during operation.

The rotor 20 includes an auxiliary ruler region 22, a main ruler region 24, an inner ring ZA region 26 and an inner ring ZB region 28 which are sequentially arranged from outside to inside. The auxiliary ruler region 22 is located at an outer ring with a center of circle of the rotor 20 as a center, and includes a plurality of first induction sheets 220 distributed annularly. Each of the first induction sheets 220 is a closed symmetrical figure divided by a hyperbola. A closed area at both ends of the figure is small, and the closed area gradually increases toward the center, forming an approximately elliptical shape with small ends and a large middle. Arc lengths of both ends of the first induction sheet 220 are equal, and radians thereof coincide with a radian of the inner ring of the rotor 20; the first induction sheet 220 covers two first emission sheets 120 in a dimensionally circumferential span. In the embodiment, the first induction sheet 220 is inclined at a certain angle, i.e., with a distal end inclined counterclockwise and a proximal end inclined clockwise. Such graphic design may ensure that the rotor 20 may evenly induce the electric field signals from the stator 10 when rotating, and will induce error compensation signals when covering the auxiliary ruler region 12 of the stator 10, which is convenient for calculation. The main ruler region 24 of the rotor 20 is located inside the auxiliary ruler region 22 and axially corresponds to the main ruler region 14 of the stator 10. The main ruler region 240 is centered on the center of the rotor 20, is evenly distributed annularly, and is divided into a plurality of second induction sheets 240. Every two second induction sheets 240 is a group, as a phase shift period of $2\pi$. One of the second induction sheets 240 covers two second emission sheets 140 in a circumferential span, and a rotating arc length of the second induction sheet 240 is twice that of the second emission sheet 140 of the stator 10. The annular areas of the inner ring DA region 26 and the inner ring DB region 28 are equal to ensure that electric field signals of the rotor 20 may be uniformly induced and received during operation, and the electric field signals are transmitted to the inner ring DA region 16 and the inner ring DB region 18 of the stator 10.

The working principle of the embodiment of the invention is described in detail now: first, the system generates a double excitation signal source:

$$y_0 = A_0 \sin(2\pi ft) \qquad\qquad \text{formula (1)}$$

$$y_1 = A_1 \cos(2\pi ft) \qquad\qquad \text{formula (2)}$$

wherein $A_0$ and $A_1$ are the signal amplitude, f is the frequency, and t is the time.
the signal sources are combined:

$$Y = y_0 * y_1 = A\sin(2\pi ft)\cos(2\pi ft) \qquad\qquad \text{formula (3)}$$

wherein $A = A_0 * A_1$.

The combined signal source is shifted through $\left(0, \frac{\pi}{4}, \frac{\pi}{2}, \frac{3\pi}{4}\right)$ and $\left(\pi, \frac{5\pi}{4}, \frac{3\pi}{2}, \frac{7\pi}{4}\right)$; in phase, and the calculation method of $\left(\pi, \frac{5\pi}{4}, \frac{3\pi}{2}, \frac{7\pi}{4}\right)$; is the same as that of $\left(0, \frac{\pi}{4}, \frac{\pi}{2}, \frac{3\pi}{4}\right)$, so only $\left(0, \frac{\pi}{4}, \frac{\pi}{2}, \frac{3\pi}{4}\right)$ is discussed.

Thus, the following signals are obtained through the phase shift of $\left(0, \frac{\pi}{4}, \frac{\pi}{2}, \frac{3\pi}{4}\right)$:

$$Y(0) = A\sin(2\pi ft)\cos(2\pi ft) \qquad\qquad \text{formula (4)}$$

$$Y\left(\frac{\pi}{4}\right) = A\sin\left(2\pi ft + \frac{\pi}{4}\right)\cos\left(2\pi ft + \frac{\pi}{4}\right) \qquad\qquad \text{formula (5)}$$

$$Y\left(\frac{\pi}{2}\right) = A\sin\left(2\pi ft + \frac{\pi}{2}\right)\cos\left(2\pi ft + \frac{\pi}{2}\right) \qquad\qquad \text{formula (6)}$$

$$Y\left(\frac{3\pi}{4}\right) = A\sin\left(2\pi ft + \frac{3\pi}{4}\right)\cos\left(2\pi ft + \frac{3\pi}{4}\right) \qquad\qquad \text{formula (7)}$$

similarly, $Y(0) = Y(\pi)$, $Y\left(\frac{\pi}{4}\right) = Y\left(\frac{\pi}{4}+\pi\right), Y\left(\frac{\pi}{2}\right) = Y\left(\frac{\pi}{2}+\pi\right), Y\left(\frac{3\pi}{4}\right) = Y\left(\frac{3\pi}{4}+\pi\right)$.

Assuming that the speed of the rotor at a certain time t is V, then the angle by which the rotor is rotated may be expressed as:

$$Deg(t) = B \int_{t_0}^{t_1} V \, dt = BV(t_1 - t_0) = \omega(t_1 - t_0) \qquad \text{formula}$$

(8)

wherein $B = \dfrac{1}{R}$ , R is the radius of the rotor, and $\omega$ is the angular velocity of the rotor.

Then the electric field induced on the rotor should be expressed as:

$$f = Y * \int_{t_0}^{t_1} A\sin(\omega t) \cos(\omega t) \, dt \qquad \text{formula (9)}$$

Therefore, the electric field signals acting on the induction sheet are expressed as:

$$f(0) = Y(0) * \int_{t_0}^{t_1} A\sin(\omega t) \cos(\omega t) \, dt \qquad \text{formula (10)}$$

$$f\left(\frac{\pi}{4}\right) = Y\left(\frac{\pi}{4}\right) * \int_{t_0}^{t_1} A\sin\left(\omega t + \frac{\pi}{4}\right) \cos\left(\omega t + \frac{\pi}{4}\right) \, dt \qquad \text{formula}$$

(11)

$$f\left(\frac{\pi}{2}\right) = Y\left(\frac{\pi}{2}\right) * \int_{t_0}^{t_1} A\sin\left(\omega t + \frac{\pi}{2}\right) \cos\left(\omega t + \frac{\pi}{2}\right) \, dt \qquad \text{formula}$$

(12)

$$f\left(\frac{3\pi}{4}\right) = Y\left(\frac{3\pi}{4}\right) * \int_{t_0}^{t_1} A\sin\left(\omega t + \frac{3\pi}{4}\right) \cos\left(\omega t + \frac{3\pi}{4}\right) \, dt \qquad \text{formula}$$

(13)

Finally, a formula for the relationship between angular space and time is obtained through spacetime transformation:

$$F = = f(0) + f\left(\frac{\pi}{4}\right) + f\left(\frac{\pi}{2}\right) + f\left(\frac{3\pi}{4}\right) \qquad \text{formula (14)}$$

There are a total of 4 combinations according to the arrangement order of the induction sheets, and the formulas are finally simplified as:

$$F(t) = E\sin(2k\pi f_c t + Deg(t)) \qquad \text{formula (15)}$$

wherein E is the amplitude of the signal, k is a constant coefficient, *Deg(t)* is the angle of rotation by which the rotor is rotated after the time t, and $f_c$ is the frequency of the combined signal.

Let $\theta = Deg(t)$, and the initial angle of the rotor is $\theta_0$, then the following may be obtained:

$$F(t) = E\sin(2k\pi f_c t + \theta_0 + \theta) \qquad \text{formula (16)}$$

If the rotor starts rotating from the zero scale, $\theta_0 = 0$, then the following may be obtained:

$$F(t) = E\sin(2k\pi f_c t + \theta) \qquad \text{formula (17)}$$

When the rotor is stationary, with an initial angle of $\theta = 0$, the following may be obtained:

$$F(t) = E\sin(2k\pi f_c t + \theta_0) \qquad \text{Formula (18)}$$

In this way, regardless of whether the rotor is stationary or moving, the system may obtain the sine wave based on the phase change of the relative angle between the rotor and the stator.

By calculating $\theta$, the changes in the current relative angle value of the rotor and stator may be obtained, and the absolute angle value of the rotor and stator may be calculated according to the zero point of the system signal of $y_0, y_1, Y$.

In combination of Fig. 3, the above working principle is implemented by the following steps:

In the first step, the digital signal source generates two excitation signals, sine signals and cosine signals, and the function is expressed as formula (1, 2).

In the second step, the two excitation signals are shifted in phase digitally to obtain two groups of signals with a phase difference of $\frac{\pi}{4}$

In the third step, the product of two signals is obtained by digitally combining, and the function is expressed as formula (3).

In the fourth step, the output and amplification are performed through digital-to-analog conversion to obtain 4 groups of combined signals with a phase difference of $\frac{\pi}{4}$, and the function is expressed as formula (4, 5, 6, 7).

In the fifth step, the combined signal (Y(0), $Y\left(\frac{\pi}{2}\right), Y(\pi), Y\left(\frac{3\pi}{2}\right)$ ) is respectively applied to the $N_1$ second emission regions of the main ruler region of the stator, and circulated clockwise in the order of (Y(0), $Y\left(\frac{\pi}{2}\right), Y(\pi), Y\left(\frac{3\pi}{2}\right)$ ), as shown in Fig. (1). $N_1$ is a multiple of 4.

In the sixth step, the main ruler region $(Zm_0, Zm_1)$ of the rotor is circulated sequentially, and each of the second induction sheets in the main ruler region of the rotor covers the two second emission sheets in the main ruler region of the rotor, i.e., $Zm_0 = (Y(0), Y(\frac{\pi}{2}))$, $Zm_1 = (Y(\pi), Y(\frac{3\pi}{2}))$, which is circulated sequentially.

In the seventh step, the induction signals of the main ruler region $(Zm_0, Zm_1)$ of the rotor is fed back to the inner ring DA region and the inner ring DB region of the stator through the inner ring ZA region and the inner ring ZB region, as shown in Fig. 2.

In the eighth step, the induction signals of the inner ring DA region and the inner ring DB region of the stator are combined, amplified, filtered, and are subjected to digital phase identification to calculate the current angle area of the main ruler region.

The auxiliary ruler region is implemented by the following steps as further description:

In the ninth step, the combined signal is respectively applied to $N_2$ independent first emission sheets in the auxiliary ruler region of the stator (Y(0),

$$Y(\tfrac{\pi}{4}), \ Y(\tfrac{\pi}{2}), \ Y(\tfrac{3\pi}{4})) \ (Y(\pi), \ Y(\tfrac{5\pi}{4}),$$

$$Y(\tfrac{3\pi}{2}), \; Y(\tfrac{7\pi}{4}))$$

), which are circulated sequentially, as shown in Fig. 2. In the auxiliary ruler region of the stator, each group includes $2*N_2$ first emission sheets, and the angle corresponding to each of the first emission sheets is x = 180°/$N_2$. $N_2$ is a multiple of 4.

In the tenth step, when the rotor 20 rotates, according to the relative movement of the electric field, the induction signals on the first induction sheets ($Z_0$, $Z_1$, $Z_2$, $Z_3$) of the rotor are represented by formulas (10, 11, 12, 13).

In the eleventh step, the first induction sheets of the rotor ($Z_0$, $Z_1$, $Z_2$, $Z_3$) are circulated sequentially, and one of the first induction sheets of the rotor covers the two first emission sheets of the stator, i.e.,

$$Z_0 = (Y(0), Y(\tfrac{\pi}{2})), \; Z_1 = (Y(\tfrac{\pi}{4}), Y(\tfrac{3\pi}{4}))$$

, and so on.

In the twelfth step, the induction signals of the first induction sheets ($Z_0$, $Z_1$, $Z_2$, $Z_3$) of the rotor are fed back to the inner ring DA region and the inner ring DB region of the stator through the inner ring ZA region and the inner ring ZB region, as shown in Fig. 2.

In the thirteenth step, the induction signals of the inner ring DA region and the inner ring DB region of the stator are combined, amplified, filtered, and are subjected to digital phase identification to calculate the current angle area of the auxiliary ruler region.

In the fourteenth step, the current angle is calculated according to the readings in the main ruler region and the auxiliary ruler region.

In the fifteenth step, the steps 9 to 14 are repeated to calculate the angle variables.

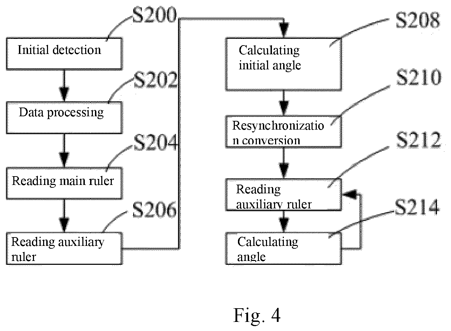

As shown in Fig. 4, the working content and flow of the software are described as below:

1. Verification and initialization (S200)
Mainly includes:

1) Zero point initialization inspection, and zero point offset compensation;
2) Verification of the zero point of the critical point of the induction region, and boundary compensation;
3) Temperature and humidity zero point verification compensation, and environmental error compensation;
4) Temperature and humidity phase compensation;
5) Zero phase verification;
6) Verification of the relative position of the dial.

2. Signal processing (S202)
Mainly includes:

1) Signal filter: filtering the input signal to remove signal components that do not meet the requirements;
2) Phase comparison: comparing the input signal with the internal high-precision phase comparator to obtain the phase difference between the external signal source and the internal signal source;
3) Error processing: processing errors in the above process.

3. Angle initialization reading

1) Verification of readings of main ruler (S204)
Reading the phase of the dial of the main ruler: calculating the scale region where the main ruler is currently located by formula (18) according to the current phase value of the dial of the main ruler;
2) Verification of readings of auxiliary ruler (S206)
Reading the phase of the dial of the main ruler: calculating the scale where the auxiliary ruler is currently located by formula (18).

4. the scale calculation is performed to obtain the current angle value according to the readings of the scale region where the main ruler is located plus the readings of the auxiliary ruler, and the current angle value is used as the initial angle value $\theta_0$ of the encoder (S208).
5. Resync detection (S210)
According to the current initial angle value, the resynchronization calculation is performed, and the conversion from formula (18) to formula (16) is completed to facilitate subsequent cyclic detection.

6. Cyclic detection for (S212~S214)

Readings of auxiliary ruler and calculated angles;

According to formula (16), the processor continuously reads the current phase of the auxiliary ruler, compares and calculates it with the current phase of the system, updates the current angle value, and performs cyclic accumulation according to the current angle value.

The embodiment of the invention uses the method of orthogonal trigonometric function double excitation, i.e., combining the sine wave and the cosine wave and obtaining the combined signals by shifting

$$\left(0, \frac{\pi}{4}, \frac{\pi}{2}, \frac{3\pi}{4}\right)$$

and

$$\left(\pi, \frac{5\pi}{4}, \frac{3\pi}{2}, \frac{7\pi}{4}\right)$$

in phase. Since the combination is performed by two excitations, synchronous phase differences between the source signals $y_0$ and $y_1$ between the combined signals Y and F(t) may be simultaneously detected, and an absolute angle value is calculated by comparing the phase difference. With the phase shift of $\frac{\pi}{4}$, internal reference signals may be based on $\pi$ or $2\pi$, i.e., combination of (external $\pi$, internal $\pi$) and (external $\pi$, internal $2\pi$) may effectively reduce calculation errors during high-speed and low-speed rotation. Even if the phase and frequency of the source signal are disturbed, it will only appear as low-frequency interference or DC interference on the combined signals, because the center frequency of the combined signal is twice the center frequency of the source signal. In this way, it is easy to pass through the band-pass filter, and the interference signal may be eliminated, so that a relatively clean signal may be obtained for phase comparison, thereby reducing the system errors.

The descriptions above are only preferred embodiments of the present invention, but are not intended to limit the present invention.

**Claims**

1.  An orthogonal trigonometric function double excitation-based encoder, comprising a stator (10) and a rotor (20), wherein the stator (10) is arranged coaxially and in parallel with the rotor (20); the stator comprises an auxiliary ruler region, a main ruler region, an inner ring DA region and an inner ring DB region which are sequentially arranged from outside to inside; the rotor (20) includes an auxiliary ruler region, a main ruler region, an inner ring ZA region and an inner ring ZB region which are sequentially arranged from outside to inside; the auxiliary ruler region of the stator (10) is annularly and uniformly divided into a plurality of first emission sheets (120), every four consecutive first emission sheets (120) form a group, and every two groups of first emission sheets (120) are configured to be used for signals of one period; the main ruler region of the stator (10) is annularly and uniformly divided into a plurality of second emission sheets (140), every two consecutive second emission sheets (140) form a group, and every two groups of second emission sheets (140) are configured to be used for signals of one period; the auxiliary ruler region of the rotor (20) is annularly divided into a plurality of first induction sheets (220), and one first induction sheet (220) covers two continuous first emission sheets (120); the main ruler region of the rotor (20) is annularly divided into a plurality of second induction sheets, and one second induction sheet covers two continuous second emission sheets (140) in a circumferential span; a rotating arc length of the second induction sheet is twice that of the second emission sheet of the stator (10);

    wherein:

    an outer end of the first induction sheet (220) is inclined counterclockwise, and an inner end thereof is inclined clockwise; and

**characterized in that**

the first induction sheet (220) is a closed symmetrical figure formed by hyperbola division, and a closed area of both ends of the first induction sheet (220) is small, and wherein the closed area gradually increases toward a center point thereof, forming an approximately elliptical shape with small ends and a large middle.

2. The orthogonal trigonometric function double excitation-based encoder according to claim 1, wherein the two groups of first emission sheets (120) are arranged radially and symmetrically among the groups, and the two second emission sheets (140) of each group are arranged radially and symmetrically.

3. The orthogonal trigonometric function double excitation-based encoder according to claim 2, wherein inner ends of each group of first emission sheets (120) jointly form a closed arc protruding toward an axis of the rotor (20), and an inner end of the second emission sheet forms a closed arc protruding toward the axis of the rotor (20).

4. The orthogonal trigonometric function double excitation-based encoder according to any one of claims 1 to 3, wherein arc lengths of both ends of the first induction sheet (220) of the rotor (20) are equal.

5. The orthogonal trigonometric function double excitation-based encoder according to claim 1, wherein annular areas of the inner ring DA region and the inner ring DB region of the stator (10) are equal, and annular areas of the inner ring ZA region and the inner ring ZB region of the rotor (20) are equal.

6. An operation method of the orthogonal trigonometric function double excitation-based encoder according to any one of claims 1 to 5, comprises steps of:

step 1, generating, by a digital signal source, two excitation signals, including a sine wave signal and a cosine wave signal;
step 2, shifting the two excitation signals digitally in phase to obtain two groups of signals with a phase difference of $\frac{\pi}{4}$ ;
step 3, combining the two groups of signals;
step 4, performing digital-to-analog conversion to obtain two groups of combined signals with a phase difference of $\frac{\pi}{4}$ ;
step 5, amplifying the combined signals;
step 6, inducting, by the stator (10) and the rotor (20), the signals, and feeding back induction signals in the main ruler region of the rotor (20) to the inner ring DA region and the inner ring DB region through the inner ring ZA region and the inner ring ZB region;
step 7, combining signals inducted in the inner ring DA region and the inner ring DB region of the stator (10);
step 8, amplifying the signals;
step 9, performing digital phase identification; and
Step 10, performing digital processing, calculating a current angular region in which the main ruler region and the auxiliary ruler region of the stator (10) and the main ruler region and the auxiliary ruler region of the rotor (20) are located, and calculating a current angle according to readings of the main ruler regions and the auxiliary ruler regions.

7. The operation method of the orthogonal trigonometric function double excitation-based encoder according to claim 6, wherein the combined signals are also respectively applied to the eight first emission sheets (120) in the auxiliary ruler region of the stator (10), and the combined signals are also respectively applied to the four second emission sheets (140) in the main ruler region of the stator (10).

**Patentansprüche**

1. Encoder mit orthogonaler trigonometrischer Funktion auf Doppelerregungsbasis, einen Stator (10) und einen Rotor (20) umfassend, wobei der Stator (10) koaxial mit und parallel zum Rotor (20) angeordnet ist, der Stator eine Hilfsreglerregion, eine Hauptreglerregion, eine Innenring-DA-Region und eine Innenring-DB-Region umfasst, die von außen nach innen nacheinander angeordnet sind, der Rotor (20) eine Hilfsreglerregion, eine Hauptreglerregion, eine Innenring-ZA-Region und eine Innenring-ZB-Region beinhaltet, die von außen nach innen nacheinander angeordnet sind, die Hilfsreglerregion des Stators (10) kranzförmig und gleichmäßig in mehrere erste Emissionsplatten (120) unterteilt ist, immer vier aufeinanderfolgende erste Emissionsplatten (120) eine Gruppe bilden und immer zwei Gruppen erster Emissionsplatten (120) dafür gestaltet sind, für Signale einer Periode verwendet zu werden, die Hauptreglerregion des Stators (10) kranzförmig und gleichmäßig in mehrere zweite Emissionsplatten (140) unterteilt ist, immer zwei aufeinanderfolgende zweite Emissionsplatten (140) eine Gruppe bilden und immer zwei Gruppen zweiter Emissionsplatten (140) dafür gestaltet sind, für Signale einer Periode verwendet zu werden, die Hilfsreglerregion des Rotors (20) kranzförmig in mehrere erste Induktionsplatten (220) unterteilt ist, und eine erste Induktionsplatte (220) zwei kontinuierliche erste Emissionsplatten (120) bedeckt, die Hauptreglerregion des Rotors (20) kranzförmig in mehrere zweite Induktionsplatten unterteilt ist und eine zweite Induktionsplatte zwei kontinuierliche zweite Emissionsplatten (140) in einer umlaufenden Spanne abdeckt, eine Rotationsbogenlänge der zweiten Induktionsplatte zweimal so groß wie die der zweiten Emissionsplatte des Stators (10) ist, wobei:

ein äußeres Ende der ersten Induktionsplatte (220) entgegen dem Uhrzeigersinn geneigt ist und ihr inneres Ende im Uhrzeigersinn geneigt ist und

**dadurch gekennzeichnet, dass** die erste Induktionsplatte (220) eine geschlossene geometrische Figur ist, die durch Hyperbelteilung gebildet ist, und ein geschlossener Bereich beider Enden der ersten Induktionsplatte (220) klein ist und wobei der geschlossene Bereich hin zu dessen Mittelpunkt hin allmählich zunimmt, was eine ungefähr elliptische Form mit schmalen Enden und großer Mitte bildet.

2. Encoder mit orthogonaler trigonometrischer Funktion auf Doppelerregungsbasis nach Anspruch 1, wobei die zwei Gruppen erster Emissionsplatten (120) radial und symmetrisch in den Gruppen angeordnet sind und die zwei zweiten Emissionsplatten (140) jeder Gruppe radial und symmetrisch angeordnet sind.

3. Encoder mit orthogonaler trigonometrischer Funktion auf Doppelerregungsbasis nach Anspruch 2, wobei innere Enden jeder Gruppe erster Emissionsplatten (120) gemeinsam einen geschlossenen Bogen bilden, der hin zu einer Achse des Rotors (20) hervorsteht, und ein inneres Ende der zweiten Emissionsplatte einen geschlossenen Bogen bildet, der hin zu der Achse des Rotors (20) hervorsteht.

4. Encoder mit orthogonaler trigonometrischer Funktion auf Doppelerregungsbasis nach einem der Ansprüche 1 bis 3, wobei Bogenlängen beider Enden der ersten Induktionsplatte (220) des Rotors (20) gleich sind.

5. Encoder mit orthogonaler trigonometrischer Funktion auf Doppelerregungsbasis nach Anspruch 1, wobei kranzförmige Bereiche der Innenring-DA-Region und der Innenring-DB-Region des Stators (10) gleich sind und kranzförmige Bereiche der Innenring-ZA-Region und der Innenring-ZB-Region des Rotors (20) gleich sind.

6. Verfahren zum Betreiben eines Encoders mit orthogonaler trigonometrischer Funktion auf Doppelerregungsbasis nach einem der Ansprüche 1 bis 5, folgende Schritte umfassend:

Schritt 1, Erzeugen zweier Erregungssingale, die ein Sinuswellensignal und ein Kosinuswellensignal beinhalten, durch eine digitale Signalquelle,

Schritt 2, digitales Verschieben der Phasen der zwei Erregungssingale, um zwei Gruppen Signale mit einer Phasendifferenz von $\frac{\pi}{4}$ zu erzielen,

Schritt 3, Kombinieren der zwei Gruppen von Signalen,

Schritt 4, Durchführen einer Digital-Analog-Umwandlung, um zwei Gruppen kombinierter Signale mit einer Phasendifferenz von $\frac{\pi}{4}$ zu erzielen,

Schritt 5, Verstärken der kombinierten Signale,

Schritt 6, Einspeisen der Signale durch den Stator (10) und den Rotor (20) und Rückführen von Einspeisungssignale in der Hauptreglerregion des Rotors (20) zu der Innenring-DA-Region und der Innenring-DB-Region über die Innenring-ZA-Region und die Innenring-ZB-Region,

Schritt 7, Kombinieren von Signales, die in die Innenring-DA-Region und die Innenring-DB-Region des Stators (10) eingespeist wurden,

Schritt 8, Verstärken der Signale,

Schritt 9, Durchführen einer digitalen Phasenidentifizierung und

Schritt 10, Durchführen einer digitalen Verarbeitung, Berechnen einer aktuellen Winkelregion, in der sich die Hauptreglerregion und die Hilfsreglerregion des Stators (10) sowie die Hauptreglerregion und die Hilfsreglerregion des Rotors (20) befinden, und Berechnen eines aktuellen Winkels gemäß Auslesungen der Hauptreglerregionen und der Hilfsreglerregionen.

7. Verfahren zum Betreiben des Encoders mit orthogonaler trigonometrischer Funktion auf Doppelerregungsbasis nach Anspruch 6, wobei die kombinierten Signale außerdem jeweils auf die acht ersten Emissionsplatten (120) in der Hilfsreglerregion des Stators (10) angewandt werden und die kombinierten Signale außerdem jeweils auf die vier zweiten Emissionsplatten (140) in der Hauptreglerregion des Stators (10) angewandt werden.

**Revendications**

1. Codeur basé sur une double excitation d'une fonction trigonométrique orthogonale, comprenant un stator (10) et un rotor (20), dans lequel le stator (10) est agencé coaxialement et en parallèle avec le rotor (20) ; le stator comprend une région de règle auxiliaire, une région de règle principale, une région DA de bague interne et une région DB de bague interne qui sont séquentiellement agencées de l'extérieur vers l'intérieur ; le rotor (20) inclut une région de règle auxiliaire, une région de règle principale, une région ZA de bague interne et une région ZB de bague interne qui sont séquentiellement agencées de l'extérieur vers l'intérieur ; la région de règle auxiliaire du stator (10) est annulairement et uniformément divisée en une pluralité de premières feuilles d'émission (120), toutes les quatre premières feuilles d'émission (120) consécutives forment un groupe, et tous les deux groupes de premières feuilles d'émission (120) sont configurés pour être utilisés pour des signaux d'une période ; la région de règle principale du stator (10) est annulairement et uniformément divisée en une pluralité de deuxièmes feuilles d'émission (140), toutes les deux deuxièmes feuilles d'émission (140) consécutives forment un groupe, et tous les deux groupes de deuxièmes feuilles d'émission (140) sont configurés pour être utilisés pour des signaux d'une période ; la région de règle auxiliaire du rotor (20) est annulairement divisée en une pluralité de premières feuilles d'induction (220), et une première feuille d'induction (220) couvre deux premières feuilles d'émission continues (120) ; la région de règle principale du rotor (20) est annulairement divisée en une pluralité de deuxièmes feuilles d'induction, et une deuxième feuille d'induction couvre deux deuxièmes feuilles d'émission continues (140) sur une étendue circonférentielle ; une longueur d'arc rotatif de la deuxième feuille d'induction est deux fois celle de la deuxième feuille d'émission du stator (10) ;
dans lequel :

   une extrémité externe de la première feuille d'induction (220) est inclinée dans le sens antihoraire, et une extrémité interne de celle-ci est inclinée dans le sens horaire ; et
   **caractérisé en ce que**
   la première feuille d'induction (220) est une figure symétrique fermée formée par division hyperbolique, et une zone fermée des deux extrémités de la première feuille d'induction (220) est petite, et dans lequel la zone fermée augmente graduellement vers un point central de celle-ci, formant une forme approximativement elliptique avec de petites extrémités et un grand milieu.

2. Codeur basé sur une double excitation d'une fonction trigonométrique orthogonale selon la revendication 1, dans lequel les deux groupes de premières feuilles d'émission (120) sont agencés radialement et symétriquement parmi les groupes, et les deux deuxièmes feuilles d'émission (140) de chaque groupe sont agencées radialement et symétriquement.

3. Codeur basé sur une double excitation d'une fonction trigonométrique orthogonale selon la revendication 2, dans lequel les extrémités internes de chaque groupe de premières feuilles d'émission (120) forment conjointement un arc fermé faisant saillie vers un axe du rotor (20), et une extrémité interne de la deuxième feuille d'émission forme un arc fermé faisant saillie vers l'axe du rotor (20).

4. Codeur basé sur une double excitation d'une fonction trigonométrique orthogonale selon l'une quelconque des revendications 1 à 3, dans lequel les longueurs d'arc des deux extrémités de la première feuille d'induction (220) du rotor (20) sont égales.

5. Codeur basé sur une double excitation d'une fonction trigonométrique orthogonale selon la revendication 1, dans lequel les zones annulaires de la région DA de bague interne et de la région DB de bague interne du stator (10) sont égales, et les zones annulaires de la région ZA de bague interne et de la région ZB de bague interne du rotor (20) sont égales.

6. Procédé de fonctionnement du codeur basé sur une double excitation d'une fonction trigonométrique orthogonale selon l'une quelconque des revendications 1 à 5, qui comprend les étapes de :

étape 1, génération, par une source de signal numérique, de deux signaux d'excitation, incluant un signal d'onde sinusoïdale et un signal d'onde cosinusoïdale ;

étape 2, décalage de phase numérique des deux signaux d'excitation pour obtenir deux groupes de signaux avec une différence de phase de $\dfrac{\pi}{4}$ ;

étape 3, combinaison de deux groupes de signaux ;

étape 4, réalisation d'une conversion numérique-analogique pour obtenir deux groupes de signaux combinés avec une différence de phase de $\dfrac{\pi}{4}$ ;

étape 5, amplification des signaux combinés ;

étape 6, induction, par le stator (10) et le rotor (20), des signaux, et rétroaction des signaux d'induction dans la région de règle principale du rotor (20) vers la région DA de bague interne et la région DB de bague interne à travers la région ZA de bague interne et la région ZB de bague interne ;

étape 7, combinaison des signaux induits dans la zone DA de bague interne et dans la zone DB de bague interne du stator (10) ;

étape 8, amplification des signaux ;

étape 9, réalisation de l'identification de phase numérique ; et

étape 10, réalisation d'un traitement numérique, calcul d'une région angulaire actuelle dans laquelle la région de règle principale et la région de règle auxiliaire du stator (10) et la région de règle principale et la région de règle auxiliaire du rotor (20) sont situées, et calcul d'un angle actuel selon les relevés des régions de règle principale et des régions de règle auxiliaire.

7.  Procédé de fonctionnement du codeur basé sur une double excitation d'une fonction trigonométrique orthogonale selon la revendication 6, dans lequel les signaux combinés sont également respectivement appliqués aux huit premières feuilles d'émission (120) dans la région de règle auxiliaire du stator (10), et les signaux combinés sont également respectivement appliqués aux quatre deuxièmes feuilles d'émission (140) dans la région de règle principale du stator (10).

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111340588

- CN 111220186 A